# EUROPÄISCHE PATENTSCHRIFT

(11) **EP 0 485 022 B1**
(45) Veröffentlichungstag und Bekanntmachung des Hinweises auf die Patenterteilung: **06.08.1997**
(21) Anmeldenummer: 91202824.8
(22) Anmeldetag: 31.10.1991
(51) Int. Cl.: H04J 3/07

(54) **Schaltungsanordnung zum Entfernen von Stopfbits**
Circuit for removing stuff bits
Dispositif de suppression de bits de bourrage

(30) Priorität: 08.11.1990 DE 4035438
(43) Veröffentlichungstag der Anmeldung: 13.05.1992
(73) Patentinhaber: Lucent Technologies Inc., Murray Hill, New Jersey 07974-0636 (US)
(72) Erfinder: Niegel, Michael, Dipl.-Ing., W-8560 Lauf (DE); Urbansky, Ralph, Dr., W-8501 Schwaig 1 (DE); Robledo, Miguel, Dr.-Ing., W-8500 Nürnberg 10 (DE)
(74) Vertreter: Tergau, Enno, Dipl.-Ing.

(56) Entgegenhaltungen:
- EP-A- 0 311 448
- EP-A- 0 374 436

## Beschreibung

Die Erfindung betrifft eine Schaltungsanordnung zum Entfernen von Stopfbits in einem nach Rahmen strukturierten Signal, das zu jeweils n parallelen Bits vorliegt, mit
- einer Speicherschaltung zum Speichern der parallel zugeführten Bits,
- einer steuerbaren der Speicherschaltung nachgeschalteten Auswahlschaltung mit n Ausgängen, welche zur Weiterleitung der in der Speicherschaltung gespeicherten Bits an die n Ausgänge in Abhägigkeit eines Steuersignals vorgesehen ist, und
- einer Steuerschaltung zur Einstellung des Schaltzustand der Auswahlschaltung mittels des Steuersignals.

Eine derartige Schaltungsanordnung ist aus der EP-A2-0 374 436 bekannt. Sie wird zum Beispiel in Nachrichtenübertragungssystemen gebraucht, bei denen zur Anpassung der Bitraten zweier Datensignale, die unterschiedliche Taktfrequenzen haben, sogenannte Stopfbits in das Datensignal mit der niedrigeren Taktfrequenz eingebaut worden sind. Diese Stopfbits stellen keine eigentliche Information dar und werden nach der Datenübertragung durch eine Anordnung mit an oben angegebenen Merkmalen wieder entfernt. Die Stopfbits befinden sich an definierten Stellen im Datensignal. Die meisten dieser Stopfbits sind fest eingebaut und werden zur groben Frequenzanpassung benötigt. Ein sogenanntes variables Stopfbit, das unregelmäßig in die Daten eingebaut wird, dient zur feineren Frequenzanpassung. Die Information, ob ein variables Stopfbit übertragen wird, wird ebenfalls im Datensignal an einer definierten Stelle als Stopfinformation übermittelt. Im Empfänger folgt die Rückgewinnung der ursprünglichen Datenrate durch das Entfernen aller Stopfbits und aller sonstigen Zusatzinformationen.

Sollen in einem seriellen Datensignal mit einer Bitrate der Größenordnung 140 MBit/s Stopfbits entfernt werden, so muß die gesamte Schaltungsanordnung in der sehr verlustbehafteten ECL-Technologie ausgelegt werden. Um die Verluste zu verringern, wird das serielle Datensignal durch einen Serien-Parallel-Wandler in n parallele Bitströme umgewandelt. Ist n nur groß genug, so können die Datenströme nach der Umwandlung in der verlustarmen CMOS-Technologie verarbeitet werden.

Nach der Umwandlung des seriellen Datensignals in n parallele Bitströme ergibt sich das Problem, die Stopfbits aus den Bitströmen zu entfernen. Hierfür wird bei der EP-A2-0 374 436 eine Speicherschaltung und eine nachgeschaltete, steuerbare Auswahlschaltung mit n Ausgängen verwendet. Die Speicherschaltung der EP-A2-0 374 436 enthält mindestens 2n-1 Speicherzellen. Die Steuerschaltung, mit der der Schaltzustand der Auswahlschaltung eingestellt wird, ist nicht im Detail beschrieben. Sie ist jedoch über mindestens 2n-1 Steuerleitungen mit der Auswahlschaltung verbunden, so daß in ihr eine nicht erkennbare Umrechnung der Stopfinformation in die Steuersignale für die Auswahlschaltung stattfinden muß.

Der Erfindung liegt die Aufgabe zugrunde, eine Schaltungsanordnung der eingangs genannten Art anzugeben, bei der die Speicherschaltung weniger Speicherzellen enthält. Eine Zusatzaufgabe besteht darin, die Auswahlschaltung derart aufzubauen, daß sie mit einer vergleichsweise einfachen Steuerschaltung gesteuert werden kann.

Diese Aufgabe wird dadurch gelöst,
daß die Speicherschaltung n Verzögerungsglieder enthält, welche zur Verzögerung jedes der n parallelen Bites um die Dauer eines Bittaktes vorgesehen sind, und daß die Steuerschaltung zu einer vorbestimmten Zeit zur Sperrung wenigstens eines Verzögerungsglied um einen Bittakt vorgesehen ist.

Darauf aufbauend wird die Zusatzaufgabe dadurch gelöst,
daß die Auswahlschaltung aus Kaskaden von addressierbaren Muliplexern besteht, und
daß die Steuerschaltung aus einem modulo n zählenden Stopfbitszähler besteht,
dessen Stand durch die Stopfinformationen verstellt werden kann, und
daß der Stand des Stopfbitzählers sowie die Stopfbitinformation werden Adressen für die Multiplexer bilden, und
daß die Adresseingänge der Multiplexer einer Kaskade parallel geschaltet sind.

Anhand der Figuren und eines Ausführungsbeispiels soll die Erfindung näher erläutert werden. Es zeigen:
Fig. 1 eine erfindungsgemäße Prinzipschaltung mit ihrer technischen Umgebung,
Fig. 2 ein Zeitdiagramm zur Erläuterung der Wirkungsweise einer erfindungsgemäßen Speicherschaltung und
Fig. 3 eine Zustandstabelle,
Fig. 4 eine erfindungsgemäße Speicherschaltung mit einer nachgeschalteten erfindungsgemäßen Auswahlschaltung.

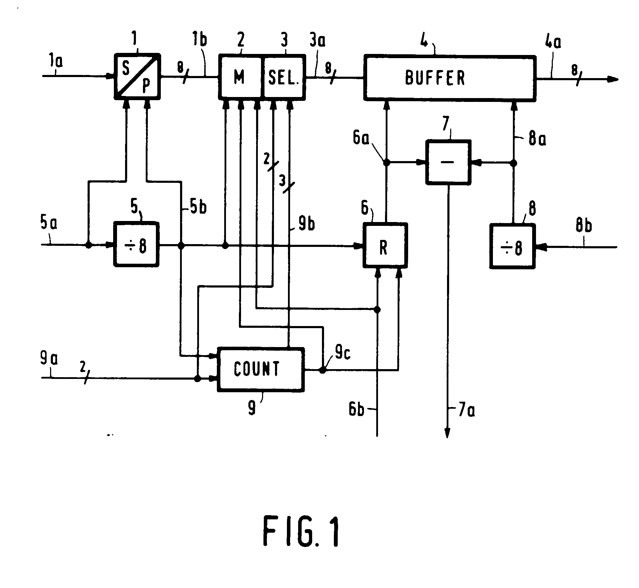

In Fig. 1 wird auf einer Leitung 1a eines nach synchronen Transportmoduln STM-1 strukturiertes Signal mit einer Bitrate von 155,52 MBit/s an eine Serien-Parallel-Wandler 1 geführt (vergleiche hierzu z.B. die CCITT-Empfehlungsentwürfe G 707, G 708 und G 709). Im folgenden werden für eine Leitung, für die Signale, die auf dieser Leitung übertragen werden, und für die Anschlussklemmen, die mit dieser Leitung verbunden sind, diegleichen Bezugszeichen verwendet.

Das Signal 1a wird von einem nicht gezeigten Demultiplexer geliefert, der einen synchronen Transmodul STM-4 in vier Transportmodule STM-1 zerlegt. Er liefert auch den zugehörigen Bittakt auf einer Leitung 5a. Der Bittakt wird durch einen Teiler 5 im Verhältnis 1:8 untersetzt. Der untersetzte Takt 5b (im folgenden Bytetakt genannt) wird dem Serien-Parallel-Wandler 1, einem Stopfbitzähler 9, einem Schreibzähler 6 und einer Speicherschaltung 2 zugeführt. Die acht Eingänge der Speicherschaltung 2 sind mit den acht Ausgängen 1b des Serien-Parallel-Wandlers 1 über eine achtadrige Leitung 1b verbunden. Das serielle Datensignal 1a ist also in acht (n=8) parallele Bitströme zerlegt worden. Neben dem Bytetakt 5b erhält die Speicherschaltung 2 die Überlaufimpulse 9c des Stopfbitzählers 9 und Impulse 6b, die von einem nicht gezeigten Rahmenzähler erzeugt werden.

Von einem ebenfalls nicht gezeigten Decoder und dem Rahmenzähler wird ein Entstopfsignal auf einer zweiadrigen Leitung 9a an den Stopfbitzähler 9 übertragen. Das Entstopfsignal 9a besteht aus einem ersten Signal, das für die Dauer einer Rahmenzeile (vergleiche die oben angegebenen CCITT-Empfehlungen) seinen Wert nicht wechselt (Stopfinformation). Sind an einer bestimmten Stelle der Rahmenzeile zwei Bits gestopft worden, also auch zwei Bits zu entfernen, so nimmt das erste Signal den Binärwert eins an; ist nur ein Bit gestopft worden, nimmt es den Binärwert null an. Das zweite Signal auf der Leitung 9a gibt durch einen Impuls der Länge einer Periode des Bytetaktes 5a an, an welcher Stelle der Rahmenzeile ein oder zwei Bits gestopft worden sind. Durch das Entstopfsignal 9a erfährt der Empfänger also, in welchem Byte einer Rahmenzeile kein, ein oder zwei Stopfbits enthalten sind. Die beiden Signale und der Bytetakt 5b sind über (nicht gezeigte) Gatter miteinander derart verknüpft und an die Zählstufen des Stopfbitzählers 9 geleitet, daß sein Stand mit einer Flanke des Bytetaktes 5b um zwei Einheiten heraufgesetzt wird, wenn in einem Byte zwei Bits gestopft worden sind, um eine Einheit, wenn nur ein Bit gestopft worden ist, und überhaupt nicht, wenn kein Bit gestopft worden ist. Andere Möglichkeiten sind innerhalb eines Bytes bei einem synchronen Transportmodul STM-1 nicht vorgesehen.

Der Speicherschaltung 2 nachgeschaltet ist eine Auswahlschaltung 3. Sie wird durch das Entstopfsignal 9a und durch den Stand des modulo 8 zählenden Stopfbitzählers 9 gesteuert. Mit den Impulsen 6b wird der Schreibzähler 6, der die Schreibadressen 6a für einen Pufferspeicher 4 erzeugt, angehalten und die Verzögerungsglieder der Speicherschaltung 2 an der Übernahme neuer Daten gehindert, (Näheres vergl. weiter unten), um das Einschreiben vorbestimmter Bytes (Stopfbytes oder Rahmenbytes) in den Pufferspeicher 4 zu unterbinden. Mit dem Überlaufimpuls 9c des Zählers 9 wird der Schreibzähler 6 ebenfalls angehalten. Über die Speicherschaltung 2 und die Auswahlschaltung 3 werden acht ausgewählte Bits von 16 Bits des Signals 1b über Leitungen 3a an den Pufferspeicher 4 übertragen. Mit einem Lesetakt 8b und einem Lesezähler 8 werden Leseadressen 8a erzeugt, mit denen acht parallele Bits 4a aus dem Pufferspeicher 4 ausgelesen werden. Die Schreibadressen 6a und die Leseadressen 8a werden durch einen Subtrahierer 7 voneinander abgezogen. Die Differenz 7a wird einer nicht gezeigten Kontrollschaltung zugeführt.

Die Signale 1a, 5a und 9a sind durch den nicht gezeigten Demultiplexer aufeinander synchronisiert worden. Daher zerlegt der Serien-Parallel-Wandler 1 das STM-1-Signal in die Bytes (besser 8-Bit-Codeworte), aus denen es aufgebaut ist. Auf einer bestimmten Ader der Leitung 1b wird deshalb immer das gleiche Bit eines Bytes (8-Bit-Codewortes) übertragen.

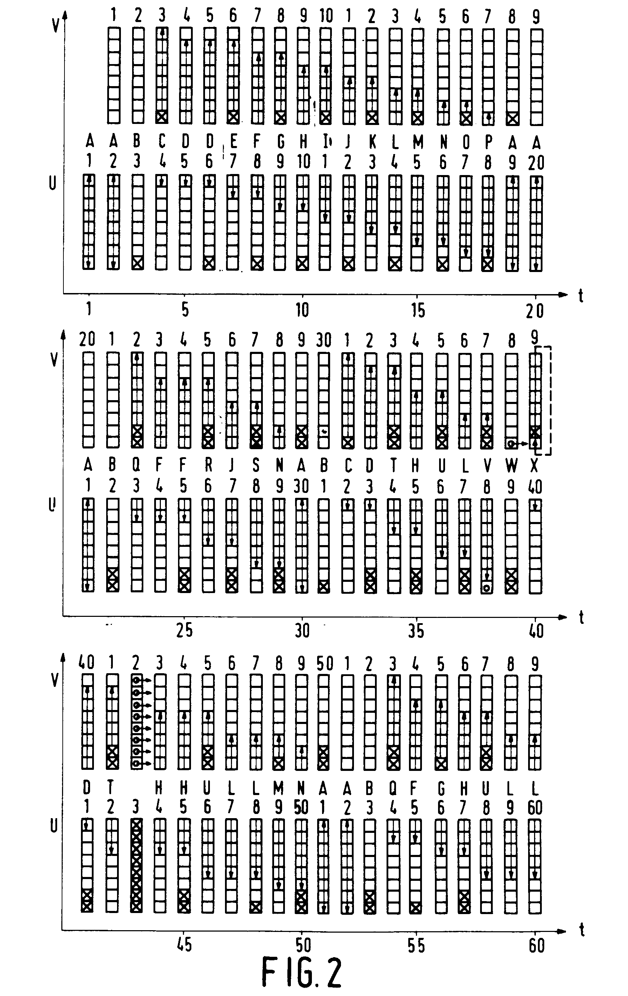

Fig. 2 zeigt drei aufeinanderfolgende Abschnitte eines Zeitdiagrammes, an dem das Zusammenspiel der erfindungsgemäßen Speicherschaltung 2 mit zunächst beliebig aufgebauter Auswahlschaltung und beliebig aufgebauter (vgl. z.B. die EP-A2-0 374 346) Steuerschaltung erklärt werden soll. Als Abszisse ist die Zeit t aufgetragen. Auf ihr sind - angefangen bei 1 - fortlaufend Taktzeitpunkte des Bytetaktes 5b markiert. Zu jedem dieser Taktzeitpunkte liefert der Serien-Parallel-Wandler 1 acht paralle Bits auf der achtadrigen Leitung 1b. Diese Bytes sind ebenfalls fortlaufend durchnumeriert und in der unteren Reihe U als Rechtecke, bestehend aus acht Quadraten, dargestellt. Die Bits der Bytes (8-Bit-Codeworte) haben eine vorgeschriebene Ordnung. Nach dieser Vorschrift entspricht das erste Bit eines Bytes dem obersten Quadrat, das zweite Bit dem darunter liegenden Quadrat und so fort bis zum achten Bit, das dem untersten Quadrat entspricht.

Über der unteren Reihe U von Bytes ist, um eine Periodendauer des Bytetaktes 5b nach rechts verschoben, die gleiche Folge von Bytes nocheinmal aufgetragen. Die obere Reihe V entspricht den um eine Bytetaktperiode verzögerten Bits eines Bytes. Die Speicherschaltung 2 hat insgesamt 16 Ausgänge. An acht Ausgängen liegen für jeweils eine Periodendauer des Bytetaktes 5b lang ein Byte der unteren Reihe U von Fig. 2 an und an den anderen acht Ausgängen gleichzeitig das darüber stehende Byte der oberen Reihe V. Diese Ausgänge (näheres vergleiche weiter unten) sind mit ebensoviel Eingängen der Auswahlschaltung 3 verbunden.

Die angekreuzten Quadrate innerhalb eines Bytes nach Fig. 2 bedeuten die Stopfbits. Wegen der schon angesprochenen Ordnung der Bits und wegen der schon erwähnten CCITT-Empfehlungsentwürfe kommen die Stopfbits nur an achter oder an siebter und achter Stelle eines Bytes vor. Maximal können also zwei Stopfbits in einem Byte vorkommen. Im vorliegenden Zusammenhang werden nur Fälle betrachtet, in denen die Maximalzahl p der in einem Byte vorkommenden Stopfbits höchstens acht ist (allgemeiner: p kleiner oder gleich n). Außerdem wird vorausgesetzt-diese Voraussetzung ist für STM-1-Signale erfüllt - daß von zwei aufeinander folgenden Bytes höchstens eines Stopfbits enthält. Besteht ein Byte nur aus Stopfbits, handelt es sich um ein Stopfbyte, dessen Entfernung auch ohne die Speicherschaltung 2 und die Auswahlschaltung 3 möglich ist.

Die nichtangekreuzten Bits, also die Nutzbits in Fig. 2 müssen wiederum geordnet und byteweise in den Pufferspeicher 4 eingelesen werden. Das heißt, die ursprünglich bestehende zeitliche Ordnung (Reihenfolge) der Nutzbits muß in eine räumliche Ordnung umgesetzt werden. Das ursprünglich zuerst erzeugte Nutzbit muß auf einer ersten Ader an den Pufferspeicher 4 übergeben werden, das folgende auf einer zweiten und sofort bis zum achten Nutzbit, das auf einer achten Ader an den Pufferspeicher 4 übertragen wird. Das neunte Nutzbit wird dann wieder auf der ersten Ader übertragen usw. Dieser Vorgang ist in Fig. 2 durch Doppelpfeile angedeutet. Jeder dieser Doppelpfeile überdeckt acht Nutzbits. Das in zeitlicher Reihenfolge an erster Stelle stehende Nutzbit ist dasjenige Bit, in dem die Pfeilspitze nach oben zeigt und das letzte (achte) Nutzbit dasjenige, in dem die Pfeilspitze nach unten zeigt. Durchfährt man die in Fig. 2 abgebildeten Doppelpfeile von der nach oben zeigenden zu der nach unter zeigenden Spitze, so ergibt sich die zeitliche Reihenfolge der Nutzbits als die Reihenfolge, in der sie überstrichen werden. In dieser Reihenfolge müssen sie auch auf die erste bis achte Ader der Leitung 3a gegeben werden.

Die Auswahlschaltung 3 ist nun von der Steuerschaltung 9 in jeder Bytetaktperiode so einzustellen, daß die von einem Doppelpfeil überdeckten Nutzbits auf die richtigen Leitungen an den Pufferspeicher 4 übertragen werden.

In Fig. 2 sind dies während der ersten Taktperiode die acht Bits des Bytes Nr. 1, die auf die Adern eins bis acht der Leitung 3a übetragen werden müssen. Gleiches gilt für das Byte Nr. 2. Das dritte von Serien-Parallel-Wandler 1 erzeugte Byte (8-Bit-Codewort) enthält an achter Stelle ein Stopfbit. Da das zweite Byte schon während der zweiten Bytetaktperiode in den Pufferspeicher 4 eingelesen worden ist, kämen während der dritten Bytetaktperiode nur die Nutzbits des dritten Bytes in Frage. Da es jedoch nur sieben sind, wird in der dritten Bytetaktperiode überhaupt kein Nutzbit in den Pufferspeicher 4 eingelesen. Daher ist in dieser Bytetaktperiode auch kein Doppelpfeil eingetragen. Die Steuerschaltung hat also ein Signal abzugeben (nach Fig. 1 an den Schreibzähler 6), durch das während der dritten Bytetaktperiode das Einlesen von Bits in den Pufferspeicher 4 verhindert wird.

Die sieben Nutzbits des dritten Bytes werden in der vierten Bytetaktperiode zusammen mit dem ersten Nutzbit des vierten Bytes in den Pufferspeicher 4 eingelesen, wie der Doppelpfeil andeutet. Die nun folgenden Vorgänge bis zum Bytetakt 21 bedürfen keiner weiteren Erläuterung, da sie aus dem bisher gesagten verständlich sind. Eine ähnliche Situation wie in der dritten Bytetaktperiode ergibt sich in der 22-sten Bytetaktperiode. Der Unterschied besteht darin, daß das 22-ste Byte zwei Stopfbits enthält, wie durch die Kreuze der Fig. 2 zu entnehmen ist.

Eine Besonderheit ergibt sich im Anschluß an die 38-ste Taktperiode. Vom 38-sten Byte sind alle Bits bis auf das letzte, mit einem Kreis versehene Bit, in den Pufferspeicher eingelesen worden. Der Versuch, innerhalb der 39-sten Taktperiode dieses Bit zusammen mit weiteren Nutzbits des Bytes Nr. 39 zu übertragen, würde scheitern, da das Byte Nr. 39 nur sechs Nutzbits enthält, man also zusammen lediglich sieben einzulesende Nutzbits erhalten würde. Daher wird innerhalb der 39-sten Taktperiode überhaupt kein Bit an den Pufferspeicher 4 übertragen, sondern bis zur 40-sten Taktperiode gewartet. Damit das mit einem Kreis versehene Bit des 38-sten Bytes nicht verloren geht, muß die Steuerschaltung 9 nun dafür sorgen, daß die zugehörige Speicherstelle nicht mit einem neuen Bit, also mit dem Stopfbit des 39-sten Bytes überschrieben wird. Dies ist im Takt 39 durch einen Kreis mit Pfeil angedeutet. Damit die vorgeschriebene Ordnung eingehalten wird, muß nun im 40-sten Takt die für das achte Bit des Bytes Nr. 38 vorgesehene Speicherstelle mit der ersten Ader der Leitungen 3a verbunden werden. Das erste Bit des Bytes Nr. 39 muß auf die zweite Ader gegeben werden usw. bis zum ersten Bit des Bytes Nr. 40, das auf die achte Ader gegeben werden muß.

Eine weitere Besonderheit, die hier nur der Vollständigkeit halber erwähnt wird, liegt in der 43-sten Taktperiode vor. Bei dem 43-sten Byte handelt es sich um ein Stopfbyte, das weder in die Speicherzellen der Speicherschaltung 2 noch in den Pufferspeicher 4 eingelesen werden darf. Verhindert wird das Einlesen durch die Impulse 6b, die nicht von der Steuerschaltung erzeugt werden.

Die Anzahl der unterschiedlichen Überdeckungen von acht Nutzbits mit einem Doppelpfeil wie sie in Fig. 2 gezeigt sind, ergibt die Anzahl der Schalterzustände, in die die Auswahlschaltung 3 durch die Steuerschaltung 9 gebracht werden muß, falls diese - wie bei der EP-A2-0 374 436 - aus Schaltern aufgebaut ist.

Für ein STM-1-Signal, muß die Steuerschaltung insgesamt 24 unterschiedliche Steuersignale abgeben. Darunter befinden sich Signale zum Einstellen der Auswahlschaltung (Doppelpfeile in Fig. 2), Signale, um das Einlesen in Pufferspeicher 4 zu verhindern (Taktperioden ohne Doppelpfeil und ohne mit Kreisen versehene Bits in Fig. 2) sowie Signale, um das Einlesen in den Pufferspeicher 4 und gleichzeitig das Überschreiben einer Speicherstelle der Speicherschaltung 2 zu verhindern (Taktperioden ohne Doppelpfeil, jedoch mit einem eingekreisten Bit in Fig. 2). Jedem abgegebenen Signal der Steuerschaltung entspricht einer ihrer Zustände. Ordnet man diesen Zuständen willkürlich, jedoch umkehrbar eindeutig Buchstaben des Alphabets zu, so erhält man Zustände A bis X. Die so durch einen Buchstaben gekennzeichneten Zustände sind in Fig. 2 zwischen den Bytes der unteren Reihe U und den Bytes der oberen Reihe V eingetragen.

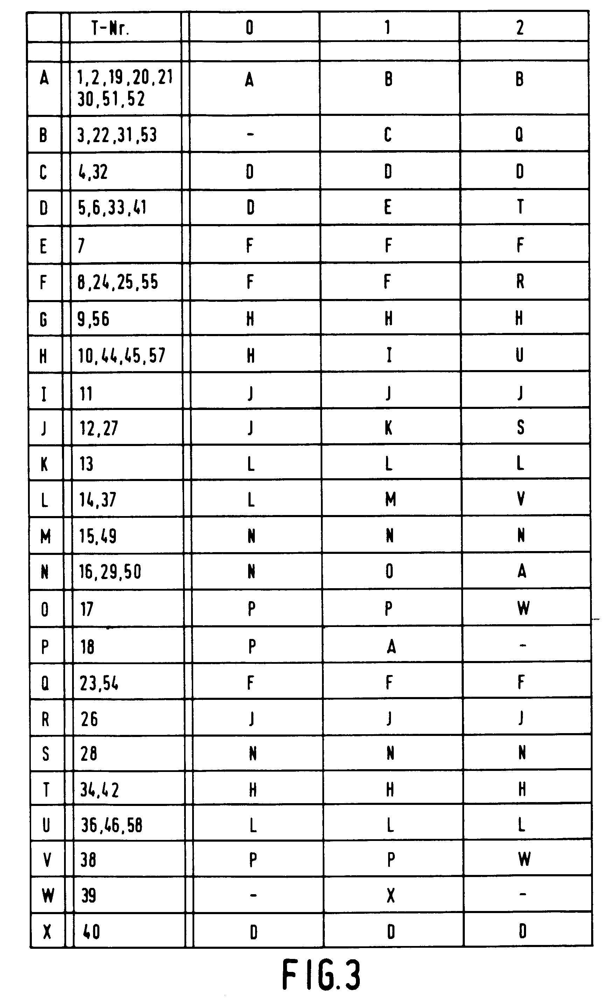

Die Steuerschaltung errechnet ihren nächsten Zustand aus dem Zustand, in dem sie sich gerade befindet, und dem Entstopfsignal 9a, entsprechend der in Fig. 3 abgebildeten Tabelle.

In Fig. 3 sind in der ersten Spalte alle Zustände A bis X der Steuerschaltung eingetragen. In der zweiten Spalte sind die Nummern der Taktperioden von Fig. 2 eingetragen, in denen sich die Steuerschaltung in dem links von den Nummern stehenden Zustand befindet. In Spalte 3, 4 und 5 ist angegeben, in welchen Zustand in der nächstfolgenden Taktperiode die Steuerschaltung übergehen muß, wenn in dieser (nächstfolgenden) Taktperiode die Gesamtzahl der Stopfbits im unteren und oberen Byte nach Fig. 2 null, eins oder zwei ist. Felder in Fig. 3, die mit einem Strich versehen sind, entsprechen Zuständen, die wegen der oben erwähnten Bedingung über das Auftreten von Stopfbits nicht vorkommen können.

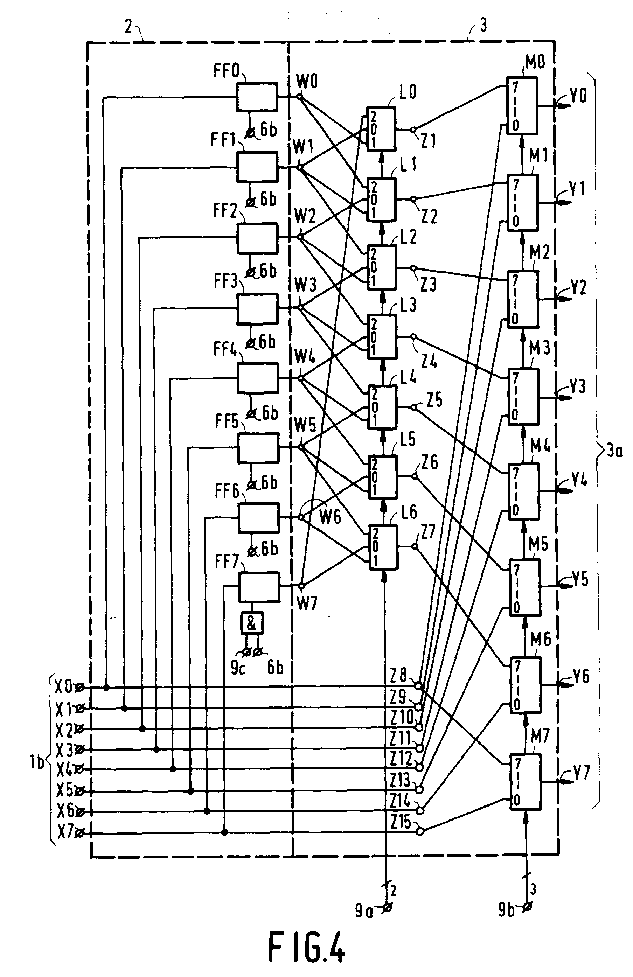

Fig. 4 zeigt den inneren Aufbau der erfindungsgemäßen Speicherschaltung 2 und den der erfindungsgemäßen Auswahlschaltung 3. Auf den acht Eingangsleitungen 1b gelangen die parallelen Bitströme X0 bis X7 sowohl direkt an die Ausgänge Z8 bis Z15 der Speicherschaltung 2 als auch über jeweils ein Flip-Flop FF0 bis FF7 an ihre Ausgänge W0 bis W7.

Jedes Flip-Flop verfügt über einen Vorbereitungseingang. Liegt an ihm eine binäre 0 an, so bleibt die Wirkung der nächsten Taktflanke des Bytetaktes 5b (der Takteingang ist nicht eingetragen) unwirksam. Trifft ein Stopfbyte ein, so geht das Signal 6b, das an die Vorbereitungseingänge gelegt ist, auf LOW (binäre 0), so daß dieses Byte weder in den Pufferspeicher 4 (mit dem Signal 6b wird auch der Schreibzähler 6 angehalten) noch in die Flip-Flops FF0 bis FF7 eingelesen wird.

An den Vorbereitungseingang des Flip-Flops FF7 ist die UND-Verknüpfung der Signale 6b und 9c gelegt. Das Flip-Flop FF7 wird also auch dann gesperrt, wenn der Stopfzähler 9 überläuft. Dieser Vorgang entspricht dem Übergang vom 39-sten zum 40-sten Takt in Fig. 2.

An die Anschlußklemmen W0 bis W7 und Z8 bis Z15 sind zwei Kaskaden von adressierbaren Multiplexern angeschlossen. Die erste Kaskade besteht aus 3:1-Multiplexern L0 bis L6 und die zweite aus 8:1-Multiplexern M0 bis M7. Alle Multiplexer der ersten Kaskade werden mit dem Entstopfsignal 9a und alle Multiplexer der zweiten Kaskade werden mit dem Stand 9b des Stopfzählers 9 parallel adressiert. Die durch die Multiplexer geordneten acht Bitströme Y0 bis Y7 werden über die Leitung 3a an den Pufferspeicher 4 weitergegeben.

Die drei Eingänge der Multiplexer L0 bis L6 sind mit den Nummern Null, Eins und Zwei gekennzeichnet. Liegt eine dieser Nummern codiert am Adresseneingang eines dieser Multiplexer an, so wird der zugehörige Eingang mit dem Ausgang des Multiplexers verbunden. Die Nummer eines auf den Ausgang durchgeschalteten Eingangs bedeutet gleichzeitig die Anzahl der Stopfbits in der aktuellen Bytetaktperiode.

Um die Verbindungen der Eingänge der Multiplexer L0 bis L6 mit den Anschlüssen W0 bis W7 eindeutig zu kennzeichnen, soll z.B. die Abkürzung (L0: W1, W0, W7) verwendet werden. Sie hat folgende Bedeutung:
Der Eingang mit der Nummer 0 des Multiplexers L0 ist mit der Klemme W1, der Eingang mit der Nummer 1 mit der Klemme W0 und der Eingang mit der Nummer 2 mit der Klemme W7 verbunden. Für die Multiplexer L0 bis L6 gilt nun nach dieser Vereinbarung:
(L0: W1, W0, W7); (L1: W2, W1, W0);
(L2: W3, W2, W1); (L3: W4, W3, W2);
(L4: W5, W4, W3); (L5: W6, W5, W4);
(L6: W7, W6, W5).

Die Multiplexer M0 bis M7 sind mit den Anschlußpunkten Z1 bis Z15 verbunden. Werden ihre Eingänge entsprechend von 0 bis 7 durchnumeriert, so lassen sich die Verbindungen entsprechend der oben angegebenen Vereinbarung wie folgt darstellen:
(M0: Z1 bis Z8); (M1: Z2 bis Z9);
(M2: Z3 bis Z10); (M3: Z4 bis Z11);
(M4: Z5 bis Z12); (M5: Z6 bis Z13);
(M6: Z7 bis Z14); (M7: Z8 bis Z15).

Die Durchnumerierung der Eingänge der Multiplexer M0 bis M7 hat zusätzlich die Bedeutung, daß ein Eingang mit der Nummer k (k = 0,...7) nur dann mit dem Ausgang des Multiplexers verbunden wird, wenn die anliegende Adresse (Stand des Stopfbitzählers 6) ebenfalls k ist.

## Patentansprüche

1. Schaltungsanordnung zum Entfernen von Stopfbits in einem nach Rahmen strukturierten Signal, das zu jeweils n parallelen Bits vorliegt, mit
- einer Speicherschaltung (2) zum Speichern der parallel zugeführten Bits,
- einer steuerbaren der Speicherschaltung (2) nachgeschalteten Auswahlschaltung (3) mit n Ausgängen, welche zur Weiterleitung der in der Speicherschaltung (2) gespeicherten Bits an die n Ausgänge in Abhägigkeit eines Steuersignals vorgesehen ist, und
- einer Steuerschaltung (9) zur Einstellung des Schaltzustand der Auswahlschaltung (3) mittels des Steuersignals,
dadurch gekennzeichnet,
daß die Speicherschaltung (2) n Verzögerungsglieder enthält, welche zur Verzögerung jedes der n parallelen Bites um die Dauer eines Bittaktes vorgesehen sind, und
daß die Steuerschaltung (9) zu einer vorbestimmten Zeit zur Sperrung wenigstens eines Verzögerungsglied (FF7) um einen Bittakt vorgesehen ist.

2. Schaltungsanordnung nach Anspruch 1,
dadurch gekennzeichnet,
daß die Auswahlschaltung (3) aus Kaskaden von adressierbaren Multiplexern besteht, und
daß die Steuerschaltung aus einem Modulo n zählenden Stopfbitzähler (9) besteht, dessen Stand durch ein Entstopfsignal (9a) verstellt werden kann, und
daß der Stand (9b) des Stopfbitzählers (9) sowie das Entstopfsignal (9b) Adressen für die Multiplexer bilden, und
daß die Adresseingänge der Multiplexer einer Kaskade parallel geschaltet sind.

## Claims

1. Circuit arrangement for removing stuffing bits in a frame-structured signal which is present in in each case n parallel bits, comprising
- a storage circuit (2) for storing the bits supplied in parallel,
- a controllable selection circuit (3) following the storage circuit (2) and having n outputs which are provided for forwarding the bits stored in the storage circuit (2) to the n outputs in dependence on a control signal, and
- a control circuit (9) for adjusting the switching state of the selection circuit (3) by means of the control signal,
characterized in that the storage circuit (2) contains n delay sections which are provided for delaying each of the n parallel bits by the length of one bit clock pulse, and that the control circuit (9) is provided for blocking at least one delay section (FF7) by one bit clock pulse at a predetermined time.

2. Circuit arrangement according to Claim 1, characterized in that the selection circuit (3) consists of cascades of addressable multiplexers, and that the control circuit consists of a stuffing-bit counter (9) counting modulo n, the count of which can be adjusted by a de-stuffing signal (9a); and that the count (9b) of the stuffing-bit counter (9) and the de-stuffing signal (9a) form addresses for the multiplexers; and that the address inputs of the multiplexers of one cascade are connected in parallel.

## Revendications

1. Circuit de suppression de bits de bourrage dans un signal structuré en trames, présentant respectivement n bits parallèles, équipé
- d'un circuit de mémoire (2) en vue de la mémorisation des bits appliqués en parallèle,
- d'un circuit de sélection (3), disposé en aval du circuit de mémoire (2), pouvant être commandé, avec n sorties, qui est prévu pour la transmission des bits mémorisés dans le circuit de mémoire (2) aux n sorties en fonction d'un signal de commande et
- d'un circuit de commande (9) en vue du réglage de l'état de commutation du circuit de sélection (3) au moyen du signal de commande,
caractérisé en ce que le circuit de mémoire (2) contient n éléments de retard, qui sont prévus en vue du retard de chacun des n bits parallèles de la durée d'une période de bit, et
en ce que le circuit de commande (9) est prévu à un instant prédéterminé en vue du blocage d'au moins un élément de retard (FF7) d'une période de bit.

2. Circuit selon la revendication 1, caractérisé en ce que le circuit de sélection (3) est constitué de cascades de multiplexeurs adressables, et en ce que le circuit de commande se compose d'un compteur de bits de bourrage (9) comptant modulo-n, dont l'état peut être modifié par un signal de débourrage (9a), et en ce que l'état (9b) du compteur de bits de bourrage (9) ainsi que le signal de débourrage (9a) forment des adresses pour les multiplexeurs, et en ce que les entrées d'adresse des multiplexeurs d'une cascade sont montées en parallèle.
